Europäisches Patentamt

European Patent Office

Office européen des brevets

(11) Veröffentlichungsnummer: **0 381 857**
**A2**

## (12) EUROPÄISCHE PATENTANMELDUNG

(21) Anmeldenummer: **89123920.4**

(22) Anmeldetag: **27.12.89**

(51) Int. Cl.5: **C08J 5/08, C08K 9/06, C08F 8/42, //(C08J5/08, C08L23:00),(C08J5/08, C08L51:00),(C08K9/06, C08L51:00)**

(30) Priorität: **29.12.88 DE 3844226**

(43) Veröffentlichungstag der Anmeldung:
**16.08.90 Patentblatt 90/33**

(84) Benannte Vertragsstaaten:
**AT CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Dittmar, Harri**
**Hauptstrasse 28**
**D-6719 Battenberg(DE)**
Erfinder: **Wahl, Ludwig**
**Edith-Stein-Strasse 14**
**D-6707 Schifferstadt(DE)**
Erfinder: **Treuling, Ullrich, Dr.**
**Lindenstrasse 18**
**D-6143 Lorsch(DE)**
Erfinder: **Heym, Manfred, Dr.**
**Bachweg 6**
**D-6719 Weisenheim(DE)**

(54) **Verbundwerkstoff aus glasmattenverstärktem Polypropylen.**

(57) Die Erfindung betrifft Verbundwerkstoffe aus glasmattenverstärktem Polypropylen, wobei ein Polypropylen mit hohem isotaktischem Anteil, niedrigem Molekulargewicht und enger Molekulargewichtsverteilung, welches Carboxylgruppen aufgepfropft enthält, kombiniert wird mit Glasmatten, deren Fasern mit einer Organosilanschlichte versehen sind. Die Verbundwerkstoffe zeichnen sich durch hohe Festigkeit und Steifigkeit aus und eignen sich für Kraftfahrzeugteile, z.B. für Sitzschalen.

EP 0 381 857 A2

## Verbundwerkstoff aus glasmattenverstärktem Polypropylen

Die Erfindung betrifft Verbundwerkstoffe mit hoher Festigkeit und Steifigkeit aus glasmattenverstärktem niedermolekularem Polypropylen.

In der DE-B-23 12 816 (GB 1 451 824) ist ein Verfahren zur Herstellung von Halbzeug aus glasmattenverstärkten thermoplastischen Kunststoffen beschrieben, wobei eine Schmelze des Thermoplasten zwischen vorgewärmte Glasfasermatten extrudiert wird. Dieses Verfahren ist mit leichtfließenden, polaren Thermoplasten, wie Polyamiden oder Polyester, verhältnismäßig einfach durchzuführen, bei den unpolaren Polyolefinen, insbesondere bei Polypropylen, ist eine gute Tränkung und Benetzung der Glasmatten mit der Thermoplastschmelze jedoch schwierig.

Man hat daher versucht, durch Verwendung eines gutfließenden Polypropylen mit niedrigem Molekulargewicht die Tränkung zu verbessern. Entsprechend hergestellte, auf dem Markt befindliche Produkte wiesen zwar für die bisherigen Anwendungszwecke ausreichend hohe Festigkeit und Steifigkeit auf. Für spezielle Strukturbauteile, wie z.B. Sitzschalen für Automobile, sind diese herkömmlichen Verbundwerkstoffe jedoch nicht geeignet, da ihre mechanischen Eigenschaften sowohl bei Raumtemperatur als auch insbesondere bei erhöhter Temperatur (80°) den Anforderungen der Automobilindustrie nicht genügen. Anstelle des Polypropylens wurden daher für diese Anwendungszwecke teurere Thermoplaste als Matrixmaterialien eingesetzt.

Der Erfindung lag daher die Aufgabe zugrunde, Verbundwerkstoffe aus glasmattenverstärktem Polypropylen mit erhöhter Festigkeit und Steifigkeit zu entwickeln.

Es wurde gefunden, daß diese Aufgabe gelöst wird, wenn man ein Polypropylen mit hohem isotaktischem Anteil, niedrigem Molekulargewicht und enger Molekulargewichtsverteilung, welches Carboxylgruppen aufgepfropft enthält, mit Glasfasermatten kombiniert, deren Fasern mit einer Organosilanschlichte versehen sind. Die genannten Maßnahmen sind für sich allein betrachtet bei der Herstellung von Polypropylen bzw. von Verstärkungsfasern bekannt, ihre gleichzeitige Anwendung ist aber neu, und es war nicht zu erwarten, daß bei dieser Kombination von Maßnahmen ein glasmattenverstärktes Polypropylen mit derart hoher Festigkeit und Steifigkeit erhalten wird.

Gegenstand der Erfindung ist demzufolge ein glasmattenverstärktes Polypropylen, enthaltend

A. Polypropylen, welches

1. einen isotaktischen Anteil von mehr als 97 % aufweist,

2. ein Molekulargewicht (Gewichtsmittel $M_w$) von 100.000 bis 300.000 hat und eine derart enge Molekulargewichtsverteilung aufweist, daß das Verhältnis Gewichtsmittel zu Zahlenmittel $M_w:M_n$ = 2 bis 6 beträgt,

3. im Mittel mindestens eine Carboxylgruppe pro 2000 Monomereinheiten aufgepfropft enthält, und

B. 10 bis 60 Gew.% Glasfasermatten, deren Fasern mit einer Organosilanschlichte versehen sind.

Zu den einzelnen Maßnahmen ist folgendes zu sagen:

A1 Isotaktischer Anteil

Der isotaktische Anteil von Polypropylen ist ein Maß für einen regelmäßigen sterischen Aufbau. Es hat sich gezeigt, daß Steifigkeit und Festigkeit von Verbundwerkstoffen aus glasmattenverstärktem Polypropylen umso höher sind, je größer dessen Gehalt an isotaktischen Einheiten ist. Er soll erfindungsgemäß größer als 96 %, vorzugsweise größer als 97 % und insbesondere größer als 98 % sein. Derzeit auf dem Markt befindliches Polypropylen hat einen isotaktischen Anteil von 95 % und weniger. Der isotaktische Anteil von Polypropylen wird durch die bei der Herstellung verwendeten Katalysatoren und durch die Art der Polymerisation bestimmt. Näheres dazu kann einschlägigen Monographien entnommen werden, z.B. Ullmann's Encyklopädie der Technischen Chemie Band 14, Seite 164 ff.

Das Propylen kann bis zu 10, vorzugsweise 1 bis 6 Gew.% üblicher Comonomerer, z.B. Ethylen, enthalten.

A2 Molekulargewicht

Die Verwendung von niedermolekularem Polypropylen mit enger Molekulargewichtsverteilung zur Herstellung von Verbundwerkstoffen aus glasmattenverstärktem Polypropylen ist aus EP-A 211 249 bekannt. Dort ist auch die Bestimmung des Molekulargewichts durch die Gelpermations chromatographie nach ASTM D 3593-80 beschrieben, sowie die Herstellung des entsprechenden Polypropylens, z.B. durch Peroxidabbau. Nach EP-A 211 249 wird durch die Verwendung des abgebauten Polypropylens das Fließverhalten des Halbzeugs verbessert, von einer Erhöhung der Festigkeit der fertigen Formteile ist nicht die Rede. Das Molekulargewicht $M_w$ des Polypropylens soll erfindungsgemäß zwischen 100.000 und 300.000, vorzugsweise zwischen 120.000 und 250.000, insbesondere zwischen 140.000 und 190.000 liegen. Das Verhältnis $M_w:M_n$ soll zwischen 2,0 und 6,0, vorzugsweise zwischen 2,5 und 4,0 liegen.

A3 Pfropfung

Mit Carboxylgruppen gepfropftes Polypropylen ist an sich bekannt. Die Pfropfung erfolgt in der Regel im Extruder, wobei die Pfropfsubstanz der Polypropylenschmelze zudosiert wird. Bevorzugt ist die Pfropfung mit Maleinsäureanhydrid, man kann jedoch auch Acrylsäure, Methacrylsäure oder Itaconsäure verwenden. Um eine ausreichende Festigkeit zu erzielen, muß das Polypropylen im Mittel mindestens eine Carboxylgruppe pro 2000 Monomereinheiten enthalten, bevorzugt sind 1,5 und mehr Carboxylgruppen. Man kann entweder das gesamte zum Einsatz kommende Polypropylen pfropfen oder man kann sehr stark gepfropftes, d.h. sehr viel Carboxylgruppen enthaltendes Polypropylen mit ungepfropftem Polypropylen abmischen.

B Glasfasern mit Silan-Schlichte

Die Verbundwerkstoffe enthalten eine oder mehrere Glasmatten, wobei der Glasgehalt 10 bis 60, vorzugsweise 25 bis 50 Gew.% beträgt. Es werden bevorzugt gebundene und/oder genadelte Matten verwendet.

Die Matten können aus wirr verlegten Endlosfasern, aus geschnittenen Fasern in ungerichteter Verteilung oder ganz bzw. teilweise aus gerichteten endlosen oder geschnittenen Fasern gebildet sein. Bevorzugt sind Glasfasermatten aus endlosen ungerichteten Glasfasern mit einem Flächengewicht von 250 bis 1200 g.m.$^{-2}$. Die Verfestigung der Matten kann mittels polymerer Bindemittel oder durch mechanische Verbindungstechniken, z.B. Nadeln, Vernähen oder Versteppen erfolgt sein. Beim Nadeln werden die Glasfasern teilweise zertrümmert, so daß neben sehr langen Fasern auch kurze Fasern vorliegen. Die mittlere Faserlänge beträgt vorzugsweise 10 bis 80 mm.

Die erfindungsgemäßen Vorteile werden nur dann enthalten, wenn Glasfasern verwendet werden, die mit einer Organosilan-Schlichte versehen sind. Bevorzugte Schlichten sind Aminosilane, z.B. p-Aminopropyltriethoxysilan.

Weitere geeignete Schlichte sind Epoxysilane, z.B. β-(3,4-Epoxicyclohexyl)- und Methacryloxy-Silane, z.B. p-Methacryloxypropyltrimethyloxysilan.

Die Organosilane sind Bestandteil der Faserschlichte, die auf die Glasfasern bevorzugt in Mengen von 0,2 bis 2, insbesondere von 0,5 bis 1 Gew.% aufgebracht wird.

Neben den Glasfasern können die Verbundwerkstoffe noch übliche Zusatzstoffe, wie Füllstoffe, Stabilisatoren, Pigmente, Flammschutzmittel, Antistatika, Nukleierungsmittel und Fließhilfsmittel enthalten.

Die Herstellung der erfindungsgemäßen Verbundwerkstoffe erfolgt vorzugsweise durch Aufschmelzen des Polypropylens in einem Extruder, Auspressen aus einer Breitschlitzdüse und Zusammenführen mit den gegebenenfalls vorgeheizten Glasfasermatten.

Das erhaltene flächige Halbzeug, das vorzugsweise eine Dicke von 0,8 bis 8 mm aufweist, ist vollständig durchtränkt, die Faserbündel sind in Einzelfilamente aufgeschlossen. Es ist problemlos zu Fertigteilen verarbeitbar durch Aufheizen auf Temperaturen oberhalb des Schmelzbereichs des Polypropylens und Verpressen in einer verhältnismäßig kalten (30 bis 90 °C) Form.

Die Verbundwerkstoffe können zur Herstellung von Kraftfahrzeugteilen, wie Sitzschalen, Batterieträger, Schallkapseln oder Windleitblechen sowie von Kofferschalen und Sonnenkollektoren verwendet werden.

Die erfindungsgemäßen Verbundwerkstoffe zeichnen sich durch hohe Festigkeit und Steifigkeit aus. Bevorzugte Werkstoffe mit einem Glasfasergehalt von 25 bis 50 Gew.% weisen eine Zugfestigkeit Z, gemessen an Normstäben nach DIN 53455 bei 23 °C auf, die höher ist als 35 + 1,9 · F [MPa], wobei F der Fasergehalt in Gew.% ist. Bei einem Glasfasergehalt von 30 Gew.% entspricht dies einem Wert von größer als 92 [MPa]. Handelsübliche Verbundwerkstoffe aus glasmattenverstärktem Polypropylen haben bei diesem Fasergehalt Zugfestigkeiten von 85 [MPa] und weniger. Bevorzugte Verbundwerkstoffe haben bei 30 % Fasergehalt Zugfestigkeiten von 95 [MPa] und mehr. Dieser Wert wird bei Handelsprodukten erst bei Glasfasergehalten von 40 Gew.% erreicht.

Mißt man die Zugfestigkeit bei 80 °C, so ergeben sich noch deutlichere Unterschiede. Bei 30 Gew.% Fasergehalt findet man bei den gängigen Produkten Werte von 50 [MPa] und darunter, was eine Anwendung als Strukturbauteile im Kraftfahrzeugsektor, z.B. als Sitzschalen, ausschließt.

Erfindungsgemäße Verbundwerkstoffe weisen dagegen bei 80 °C Zugfestigkeitswerte von 85 [MPa] und darüber auf. Vorzugsweise beträgt die Zugfestigkeit Z', gemessen nach DIN 53455 bei 80 °C mindestens das 0,8-fache, vorzugsweise mindestens das 0,9-fache, der Zugfestigkeit Z, gemessen bei 23 °C. Bei herkömmlichen Verbundwerkstoffen aus glasmattenverstärktem Polypropylen ist dagegen Z' nur etwa 50 - 60 % von Z.

Beispiel

Polypropylen mit einem isotaktischen Anteil von mehr als 98 %, einem Molmassenmittel $M_w$ von etwa 165 000, und einem Verhältnis $M_w$:$M_n$ von 3,2 wurde in einem Extruder aufgeschmolzen. Dieser Schmelze wurde Maleinsäureanhydrid in einer solchen Menge zudosiert, daß nach der Pfropfung pro 2000 Monomereinheiten 2,0 Carboxylgruppen vorhanden sind.

Mit diesem säuremodifizierten Polypropylen wurden anschließend Glasfasermatten getränkt, deren Fasern mit einer Schlichte, die p-Aminopropyltriethoxysilan enthielt, versehen waren, und die durch Verlegen und Nadeln hergestellt worden war. Die Konsolidierung zum plattenförmigen Verbundwerkstoff erfolgte mit einer Doppelbandpresse. Der Werkstoff wurde entsprechend dem herzustellenden Bauteil zugeschnitten. Die Zuschnitte wurden mit einem Infrarotstrahler auf 200°C erhitzt und in einen auf 60°C temperierten Werkzeug zu einer Sitzschale verpreßt. Die Zugfestigkeit des Werkstoffs bei Raumtemperatur betrug 90 [MPa], bei 80°C 80,5 [MPa].

**Ansprüche**

1. Glasmattenverstärktes Polypropylen, enthaltend

A. Polypropylen, welches

1. einen isotaktischen Anteil von mehr als 97 % aufweist,

2. ein Molekulargewicht (Gewichtsmittel $M_w$) von 100.000 bis 300.000 hat und eine derart enge Molekulargewichtsverteilung aufweist, daß das Verhältnis Gewichtsmittel zu Zahlenmittel $M_w$:$M_n$ = 2 bis 6 beträgt,

3. im Mittel mindestens eine Carboxylgruppe pro 2000 Monomereinheiten aufgepfropft enthält, und

B. 10 bis 60 Gew.% Glasfasermatten, deren Fasern mit einer Organosilanschlichte versehen sind.

2. Verbundwerkstoff aus glasmattenverstärktem Polypropylen nach Anspruch 1, dadurch gekennzeichnet, daß der Glasfasergehalt 25 bis 50 Gew.% beträgt, und die Zugfestigkeit, gemessen an Normstäben nach DIN 53455 bei 23°C, der Gleichung $Z > 35 + 1,9 \cdot F$ gehorcht, wobei Z die Zugfestigkeit in [MPa] und F der Fasergehalt in Gew.% ist.

3. Verbundwerkstoff nach Anspruch 2, dadurch gekennzeichnet, daß seine Zugfestigkeit Z', gemessen nach DIN 53455 bei 80°C, mindestens das 0,8-fache der Zugfestigkeit Z, gemessen bei 23°C, beträgt.